# EUROPÄISCHE PATENTSCHRIFT

(11) **EP 3 691 823 B1**
(45) Veröffentlichungstag und Bekanntmachung des Hinweises auf die Patenterteilung: **24.05.2023**
(21) Anmeldenummer: 18785804.8
(22) Anmeldetag: 04.10.2018
(51) Int. Cl.: B23K 9/16, C22C 38/58, C22C 38/52, C22C 38/46, C22C 38/44, C22C 38/06, C22C 38/02, B23K 35/02, B23K 35/362, B23K 35/36, B23K 9/23, B23K 35/30, B23K 35/368, B23K 35/40, B23K 103/04

(54) **SCHWEISSGUT UND RUTILE FÜLLDRAHTELECTRODE**
WELDING MATERIAL AND RUTILE FLUX CORED WIRE ELECTRODE
DÉPÔT DE SOUDURE ET ÉLECTRODE À FIL FOURRÉ DE RUTILE

(30) Priorität: 04.10.2017 EP 17450010
(43) Veröffentlichungstag der Anmeldung: 12.08.2020
(73) Patentinhaber: Voestalpine Böhler Welding Austria GmbH, 8605 Kapfenberg (AT)
(72) Erfinder: HOLLY, Sylvia, 8793 Trofaiach (AT); GROSS, Volker, 44149 Dortmund (DE)
(74) Vertreter: Keschmann, Marc
(86) Internationale Anmeldenummer: PCT/AT2018/000083
(87) Internationale Veröffentlichungsnummer: WO 2019/068118

(56) Entgegenhaltungen:
- EP-A1- 1 647 351
- AT-B- 298 929
- DE-A1- 2 326 442
- GB-A- 1 384 945
- JP-A- H01 215 493
- JP-A- S62 197 294
- JP-B2- 3 027 313
- KR-A- 20170 088 762
- US-A- 4 294 614

## Beschreibung

Die Erfindung betrifft ein Schweißgut sowie eine rutile Fülldrahtelektrode zur Herstellung des erfindungsgemäßen Schweißgutes, umfassend ein Füllpulver und eine das Füllpulver umschließende Hülle.

An die Werkstoffe, bspw. austenitische CrNi Stähle, und insbesondere die Schweißverbindungen bei Transport- und Lagerbehältern für flüssige Gase werden hohe Anforderungen gestellt, weil hohe Drücke und tiefe Temperaturen auftreten. Hierbei müssen die verwendeten Werkstoffe daher ausreichende mechanische Eigenschaften, insbesondere genügend Zähigkeit bei tiefen Temperaturen aufweisen, um für Anwendungen dieser Art geeignet zu sein.

Aus dem Stand der Technik ist es bekannt, für das Schweißgut Zusätze auf Nickelbasis zu verwenden, die allerdings den Nachteil haben, dass sie einerseits kostspielig und andererseits einen anderen Wärmeausdehnungskoeffizienten als das Basismaterial haben, was zu erhöhten unerwünschten Eigenspannungen führt. Weiters liegt die Festigkeit des Schweißgutes unterhalb der des Grundmaterials, sodass das Schweißgut eine Schwachstelle des Behälters darstellt.

Beispielsweise wird eine Massivdrahtelektrode für das Herstellen des Schweißgutes verwendet, die ein austenitisches Gefüge aus folgenden Legierungselementen aufweist:

| | |
|---|---|
| C: | 0,2 Gew.-% |
| Si: | 0,4 Gew.-% |
| Mn: | 10,5 Gew.-% |
| Cr: | 17,5 Gew.-% |
| Ni: | 14,0 Gew.-% |
| W: | 3,5 Gew.-% |
| Fe: | Rest. |

Das aus dieser Massivdrahtelektrode hergestellte Schweißgut weist die folgenden mechanischen Eigenschaften auf:

| | |
|---|---|
| Zugfestigkeit Rm: | 600 MPa |
| Kerbschlagarbeit CV bei +20°C: | 80 J |
| Kerbschlagarbeit CV bei -196°C: | 50 J |
| Bruchdehnung A5: | 30% |

Nickel und Mangan bewirken eine Absenkung der Phasen-Umwandlungstemperatur Austenit/Ferrit. Dadurch wird der Verlauf der Kerbschlagarbeit-Temperaturkurve zu tieferen Temperaturen verschoben und die Zähigkeit des Schweißgutes insbesondere bei tiefen Temperaturen erhöht. Wolfram ist ein starker Sonderkarbidbildner und unterstützt die Feinkornbildung, sodass die Zähigkeit des Schweißgutes weiter erhöht wird.

Nachteilig bei dieser Massivdrahtelektrode ist insbesondere die fehlende Positionsverschweißbarkeit, da keine stützende Schlacke während des Schweißvorganges gebildet wird.

JPH01215493 A offenbart einen Fülldraht zum Schweißen von einem rostfreien austenitischen Stahl.

Um dieses Problem zu lösen, sind rutile Fülldrahtelektroden zur Herstellung eines Schweißgutes bekannt geworden. Die Füllung von rutilen Fülldrahtelektroden besteht im Allgemeinen aus Rutil (TiO₂) mit Beimengungen aus SiO₂ und Eisenpulver, sowie zum Teil aus Mikrolegierungselementen wie Titan und Bor. Das Füllpulver befindet sich in einer Hülle, wodurch ein Schweißdraht gebildet ist.

Rutile Fülldrahtelektroden stellen u.a. eine hohe Schweißgeschwindigkeit und eine hohe Abschmelzleistung bei gleichzeitig exzellenter Nahtqualität bereit. Die Schlacke bewirkt einen Schutz der Nahtoberfläche vor Oxidation und außerdem besteht eine stützende Wirkung bei Zwangslagen-Positionsschweißungen, insbesondere einer vertikalen Schweißnaht. Durch die schnell erstarrende Rutilschlacke wird eine gute Stützwirkung erzielt, sodass die Möglichkeit der Verwendung höherer Schweißgeschwindigkeiten bei Positionsschweißungen gegeben ist. Weiters ist die Schlackenentfernbarkeit sehr gut, wobei die Schlacke teilweise sogar selbstabhebend ist.

Nachteilig bei den bekannten rutilen Fülldrahtelektroden sind die im Vergleich zu Massivdrahtelektroden schlechteren mechanischen Eigenschaften des Schweißgutes, insbesondere die geringere Kerbschlagarbeit bei tieferen Temperaturen.

Die Erfindung zielt daher darauf ab, ein Schweißgut dahingehend zu verbessern, dass die oben genannten Nachteile vermieden bzw. verringert werden. Insbesondere soll ein Schweißgut mit guten mechanischen Eigenschaften, vor allem einer hohen Kerbschlagarbeit bei tieferen Temperaturen und einer guten Positionsverschweißbarkeit geschaffen werden.

Zur Lösung dieser Aufgabe sieht die Erfindung gemäß einem ersten Aspekt ein Schweißgut der eingangs genannten Art vor, welches die folgende Richtanalyse aufweist:
C: 0,15-0,25 Gew.-%
Mn: 8,5-10,0 Gew.-%
Cr: 15,5-16,0 Gew.-%
Ni: 12,5-13,5 Gew.-%
W: 2,0-3,0 Gew.-%
Ti: 0,07-0,15, sowie ggf. weitere Bestandteile, insbesondere:
   Si: 0,5-0,7 Gew.-%
   V: 0,07-0,11 Gew.-%
   Co: 0,08-0,16 Gew.-%
   Al: 0,005-0,02 Gew.-%,
Rest Eisen.

Besonders bevorzugt ist ein Schweißgut mit der folgenden Richtanalyse:
C: 0,2 Gew.-%
Mn: 9,0 Gew.-%
Cr: 15,6 Gew.-%
Ni: 12,8 Gew.-%
W: 2,2 Gew.-%
Ti: 0,08, sowie ggf. weitere Bestandteile, insbesondere:
   Si: 0,6 Gew.-%
   V: 0,09 Gew.-%
   Co: 0,09 Gew.-%
   Al: 0,015 Gew.-%,
Rest Eisen.

Es hat sich herausgestellt, dass ein dieser Richtanalyse entsprechendes Schweißgut besonders gute mechanische Eigenschaften, insbesondere eine hohe Kerbschlagzähigkeit bei tiefen Temperaturen aufweist und zusätzlich gute Schweißeigenschaften, insbesondere eine gute Positionsverschweißbarkeit zeigt.

Bevorzugt weist das Schweißgut ein austenitisches Gefüge auf.

Besonders bevorzugt ist vorgesehen, dass das Schweißgut eine Zugfestigkeit von größer 600 MPa, bevorzugt größer 605 MPa, besonders bevorzugt zumindest 610 MPa aufweist (gemessen in einem Zugversuch gemäß EN ISO 6892-1).

Weiters ist bevorzugt vorgesehen, dass das Schweißgut eine Kerbschlagarbeit bei +20°C von größer 80 J, bevorzugt größer 90 J, besonders bevorzugt zumindest 100 J aufweist.

Bevorzugt ist vorgesehen, dass das Schweißgut eine Kerbschlagarbeit bei -196°C von größer 50 J, bevorzugt größer 55 J, besonders bevorzugt zumindest 60 J aufweist.

Die Kerbschlagarbeit ist hierbei in einem Kerbschlagbiegeversuch gemäß DIN EN ISO 148-1 ermittelt.

Bevorzugt ist vorgesehen, dass das Schweißgut eine Bruchdehnung A5 von größer 30%, bevorzugt größer 35% aufweist. Dabei wird die Bruchdehnung in einem Zugversuch gemäß EN ISO 6892-1 ermittelt, wobei das Verhältnis der Anfangsmesslänge L₀ zum Anfangsdurchmesser d₀ der Probe 5 beträgt.

Gemäß einem zweiten Aspekt stellt die Erfindung eine rutile Fülldrahtelektrode zu Herstellung eines erfindungsgemäßen Schweißgutes zur Verfügung, umfassend ein Füllpulver und eine das Füllpulver umschließende Hülle, wobei das Füllpulver 0,1-2,0 Gew.-% Kohlenstoff, 30-40 Gew.-% Mangan, 2,5-3,0 Gew.-% Chrom, 11-17 Gew.-% Nickel, 6,5-8 Gew.-% Wolfram, 1-3 Gew.-% Titan und 20-30 Gew.-% TiO₂ umfasst. Mithilfe einer solchen Fülldrahtelektrode kann das oben beschriebene Schweißgut hergestellt werden, welches insbesondere gute mechanisch-technologische Eigenschaften und gleichzeitig eine gute Verschweißbarkeit aufweist.

Bevorzugt ist vorgesehen, dass das Füllpulver weiters 0,5-2 Gew.% Silizium, 0,001-0,1 Gew.-% Phosphor, 0,001-0,1 Gew.-% Schwefel, 0,01-0,1 Gew.-% Molybdän, 0,5-2 Gew.-% Aluminium, 3-6 Gew.-% Eisen, 5-15 µg/g Bor und/oder 400-800 µg/g Bismut umfasst. Dadurch können die mechanischen Eigenschaften des Schweißgutes weiter verbessert werden.

Besonders bevorzugt weist das Füllpulver folgende Richtanalyse auf:
C: 0,8 -1,2 Gew.-%, insbesondere 1,0 Gew.-%
Mn: 33-37 Gew.-%, insbesondere 35,90 Gew.-%
Cr: 2,6-2,9 Gew.-%, insbesondere 2,70 Gew.-%
Ni: 13-15 Gew.-%, insbesondere 14,20 Gew.-%
W: 7-7,5 Gew.-%, insbesondere 7,10 Gew.-%
Ti: 1,5-2,5 Gew.-%, insbesondere 2,0 Gew.-%,
TiO₂: 22-28 Gew.-%, insbesondere 25 Gew.-%, sowie ggf.:
   Si: 1-1,5 Gew.-%, insbesondere 1,20 Gew.-%
   P: 0,005-0,02 Gew.-%, insbesondere 0,007 Gew.-%
   S: 0,005-0,05 Gew.-%, insbesondere 0,010 Gew.-%
   Mo: 0,02-0,07 Gew.-%, insbesondere 0,03 Gew.-%
   Al: 1-1,5 Gew.-%, insbesondere 1,20 Gew.-%
   B: 8-12 µg/g, insbesondere 10 µg/g
   Fe: 4-5 Gew.-%, insbesondere 4,60 Gew.-%
   Bi: 600-700 µg/g, insbesondere 625,5 µg/g.

Bevorzugt ist vorgesehen, dass das Füllpulver weiters Lichtbogenstabilisatoren aufweist, um die Schweißeigenschaften der Fülldrahtelektrode noch weiter zu verbessern.

Besonders bevorzugt ist eine Hülle mit folgender Richtanalyse vorgesehen:
C: 0,001-0,015 Gew.-%
Si: 0,30-0,60 Gew.-%
Mn: 0,90-1,30 Gew.-%
Cr: 18,0-19,5 Gew.-%
Ni: 9,70-10,5 Gew.-%, sowie ggf.:
   N: 0,01-0,025 Gew.-%
   P: 0,01-0,025 Gew.-%
   S: 0,001-0,01 Gew.-%
   Mo: 0,05-0,30 Gew.-%
   Cu: 0,05-0,20 Gew.-%
   Al: 0,01-0,03 Gew.-%
   Co: 0,05-0,20 Gew.-%.

Bei P, S, Mo, Cu, Co und Al sollen möglichst geringe Werte erreicht werden.

Besonders gute Schweißeigenschaften werden mit einer Hülle mit der folgenden Richtanalyse erzielt:
C: 0,008 Gew.-%
Si: 0,40 Gew.-%
Mn: 1,10 Gew.-%
Cr: 18,60 Gew.-%
Ni: 10,10 Gew.-%, sowie ggf.:
   N: 0,015 Gew.-%
   P: 0,01-0,025 Gew.-%
   S: 0,001-0,01 Gew.-%
   Mo: 0,05-0,30 Gew.-%
   Cu: 0,05-0,20 Gew.-%
   Al: 0,01-0,03 Gew.-%
   Co: 0,05-0,20 Gew.-%.

Weiters ist bevorzugt vorgesehen, dass das Gewicht des Füllpulvers zwischen 25 und 35%, bevorzugt 29% des Gewichts der Fülldrahtelektrode ausmacht. Dieser Wert wird auch als Füllungsgrad bezeichnet.

Bevorzugt wird der Füllgrad derart gewählt, dass die Fülldrahtelektrode ein Schweißgut gemäß dem ersten Aspekt der Erfindung absetzt.

Um einen sicheren Halt des Füllpulvers in der Hülle zu verwirklichen, ist bevorzugt vorgesehen, dass die Hülle von einem, bevorzugt überlappend, geschlossenen Band gebildet ist. Dadurch kann die Hülle einfach und effizient hergestellt werden, indem das Füllpulver in ein eingeformtes Band eingewogen und dieses anschließend verschlossen wird.

Die Erfindung wird nachfolgend anhand von Ausführungsbeispielen näher erläutert. Hierbei wurden rutile Fülldrahtelektroden mit einer Hülle und einem Füllpulver zur Herstellung eines Schweißgutes verwendet. Das Füllpulver weist die folgende Richtanalyse auf:
C: 1,0 Gew.-%
Mn: 35,90 Gew.-%
Cr: 2,70 Gew.-%
Ni: 14,20 Gew.-%
W: 7,10 Gew.-%
Ti: 2,0 Gew.-%
TiO₂: 25 Gew.-%
Si: 1,20 Gew.-%
P: 0,007 Gew.-%
S: 0,010 Gew.-%
Mo: 0,03 Gew.-%
Al: 1,20 Gew.-%
B: 10 µg/g
Bi: 625,5 µg/g
Fe: Rest.

Die Hülle weist die folgende Richtanalyse auf:
C: 0,008 Gew.-%
Si: 0,40 Gew.-%
Mn: 1,10 Gew.-%
Cr: 18,60 Gew.-%
Ni: 10,10 Gew.-%
N: 0,015 Gew.-%.

Das Schweißgut wurde jeweils mit einem Schutzgas-Schweißverfahren zur Verbindung zweier Platten aus austenitischem CrNi-Stahl mit einem Schweißdrahtdurchmesser von jeweils 1,2 mm hergestellt, wobei die folgenden Schweißparameter verwendet wurden:
Schweißspannung: 23-29 V
Schweißdrahtvorschub: 7-10m/min

### Beispiel 1

In einem ersten Ausführungsbeispiel wurde ein Schweißgut mit der folgenden Richtanalyse mithilfe der oben beschriebenen rutilen Fülldrahtelektrode hergestellt. Der Füllungsgrad der Fülldrahtelektrode beträgt bei diesem Beispiel 29%.
C: 0,20 Gew.-%
Mn: 9,3 Gew.-%
Cr: 16,0 Gew.-%
Ni: 12,7 Gew.-%
W: 2,2 Gew.-%
Ti: 0,10 Gew.-%
Si: 0,7 Gew.-%
V: 0,10 Gew.-%
Co: 0,10 Gew.-%
Al: 0,011 Gew.-%
Rest Eisen

Es wurden die folgenden Materialeigenschaften des reinen Schweißgutes gemessen, d.h. ohne Einflüsse des Basismaterials z.B. in der Wärmeeinflusszone:

| | |
|---|---|
| Zugfestigkeit Rm: | 613 MPa |
| Kerbschlagarbeit CV bei +20°C: | 104 J |
| Kerbschlagarbeit CV bei -196°C: | 60 J |
| Bruchdehnung A5: | 36% |

### Beispiel 2

In einem zweiten Ausführungsbeispiel wurde ein Schweißgut mit der folgenden Richtanalyse mithilfe der oben beschriebenen rutilen Fülldrahtelektrode hergestellt. Das Füllpulver weist gegenüber dem Beispiel 1 verringerte Werte in Gew.-% von Mn, Ni, Al und W auf und erhöhte Werte von Co und Ti. Zum Ausgleich wurden lichtbogenstabilisierende Elemente und schlackenbildende Bestandteile verändert. Der Füllungsgrad der Fülldrahtelektrode beträgt bei diesem Beispiel 29%.
C: 0,20 Gew.-%
Mn: 8,8 Gew.-%
Cr: 16,0 Gew.-%
Ni: 12,6 Gew.-%
W: 2,0 Gew.-%
Ti: 0,15 Gew.-%
Si: 0,7 Gew.-%
V: 0,10 Gew.-%
Co: 0,12 Gew.-%
Al: 0,007 Gew.-%
Rest Eisen

Es wurden die folgenden Materialeigenschaften des Schweißgutes gemessen:

| | |
|---|---|
| Zugfestigkeit Rm: | 610 MPa |
| Kerbschlagarbeit CV bei +20°C: | 106 J |
| Kerbschlagarbeit CV bei -196°C: | 62 J |
| Bruchdehnung A5: | 41% |

### Beispiel 3

In einem dritten Ausführungsbeispiel wurde ein Schweißgut mit der folgenden Richtanalyse mithilfe der oben beschriebenen rutilen Fülldrahtelektrode hergestellt. Das Füllpulver weist gegenüber dem Beispiel 1 verringerte Werte in Gew.-% von Mn und W auf und erhöhte Werte von Ni. Weiters sind Si, V, Co und Al im Unterschied zu Beispiel 1 im Füllpulver nicht vorhanden. Zum Ausgleich wurden lichtbogenstabilisierende Elemente und schlackenbildende Bestandteile verändert. Der Füllungsgrad der Fülldrahtelektrode beträgt bei diesem Beispiel 29%.
C: 0,18 Gew.-%
Mn: 9,2 Gew.-%
Cr: 15,8 Gew.-%
Ni: 12,9 Gew.-%
W: 2,15 Gew.-%
Ti: 0,1 Gew.-%
Rest Eisen

Es wurden die folgenden Materialeigenschaften des Schweißgutes gemessen:

| | |
|---|---|
| Zugfestigkeit Rm: | 625 MPa |
| Kerbschlagarbeit CV bei +20°C: | 90 J |
| Kerbschlagarbeit CV bei -196°C: | 50 J |
| Bruchdehnung A5: | 35% |

### Vergleichsbeispiel (Stand der Technik)

In einem Vergleichsbeispiel wurde ein Schweißgut mit der folgenden Richtanalyse mithilfe einer aus dem Stand der Technik bekannten Fülldrahtelektrode hergestellt.
C: 0,14 Gew.-%
Mn: 8,3 Gew.-%
Cr: 15,6 Gew.-%
Mo: 0,11 Gew.-%
V: 0,07 Gew.-%
Co: 0,08 Gew.-%
Al: 0,0001 Gew.-%
Ni: 12,4 Gew.-%
W: 1,9 Gew.-%
Ti: 0,2 Gew.-%
Rest Eisen

Es wurden die folgenden Materialeigenschaften des Schweißgutes gemessen:

| | |
|---|---|
| Zugfestigkeit Rm: | 567 MPa |
| Kerbschlagarbeit CV bei +20°C: | 73 J |
| Kerbschlagarbeit CV bei -196°C: | 37 J |
| Bruchdehnung A5: | 35% |

Bei den drei erfindungsgemäßen Ausführungsbeispielen werden also bessere mechanische Eigenschaften als bei einer Fülldrahtelektrode gemäß dem Stand der Technik (Vergleichsbeispiel) erzielt.

## Patentansprüche

1. Schweißgut, welches die folgende Richtanalyse aufweist:
C: 0,15-0,25 Gew.-%
Mn: 8,5-10,0 Gew.-%
Cr: 15,5-16,0 Gew.-%
Ni: 12,5-13,5 Gew.-%
W: 2,0-3,0 Gew.-%
Ti: 0,07-0,15 Gew.-%, sowie ggf. weitere Bestandteile, insbesondere:
Si: 0,5-0,7 Gew.-%
V: 0,07-0,11 Gew.-%
Co: 0,08-0,16 Gew.-%
Al: 0,005-0,02 Gew.-%,
Rest Eisen.

2. Schweißgut nach Anspruch 1, welches die folgende Richtanalyse aufweist:
C: 0,2 Gew.-%
Mn: 9,0 Gew.-%
Cr: 15,6 Gew.-%
Ni: 12,8 Gew.-%
W: 2,2 Gew.-%
Ti: 0,08, sowie ggf. weitere Bestandteile, insbesondere:
Si: 0,6 Gew.-%
V: 0,09 Gew.-%
Co: 0,09 Gew.-%
Al: 0,015 Gew.-%,
Rest Eisen

3. Schweißgut nach Anspruch 1 oder 2, **dadurch gekennzeichnet, dass** das Schweißgut eine Zugfestigkeit von größer 600 MPa, bevorzugt größer 605 MPa, besonders bevorzugt zumindest 610 MPa aufweist.

4. Schweißgut nach Anspruch 1, 2 oder 3, **dadurch gekennzeichnet, dass** das Schweißgut eine Kerbschlagarbeit bei +20°C von größer 80 J, bevorzugt größer 90 J, besonders bevorzugt zumindest 100 J aufweist, wobei die Kerbschlagarbeit in einem Kerbschlagbiegeversuch gemäß DIN EN ISO 148-1 ermittelt ist.

5. Schweißgut nach einem der Ansprüche 1 bis 4, **dadurch gekennzeichnet, dass** das Schweißgut eine Kerbschlagarbeit bei -196°C von größer 50 J, bevorzugt größer 55 J, besonders bevorzugt zumindest 60 J aufweist, wobei die Kerbschlagarbeit in einem Kerbschlagbiegeversuch gemäß DIN EN ISO 148-1 ermittelt ist.

6. Schweißgut nach einem der Ansprüche 1 bis 5, **dadurch gekennzeichnet, dass** das Schweißgut eine Bruchdehnung A5 von größer 30%, bevorzugt größer 35% aufweist.

7. Rutile Fülldrahtelektrode zu Herstellung eines Schweißgutes nach einem der Ansprüche 1 bis 6, umfassend ein Füllpulver und eine das Füllpulver umschließende Hülle, **dadurch gekennzeichnet, dass** das Füllpulver 0,1-2,0 Gew.-% Kohlenstoff, 30-40 Gew.-% Mangan, 2,5-3,0 Gew.-% Chrom, 11-17 Gew.-% Nickel, 6,5-8 Gew.-% Wolfram, 1-3 Gew.-% Titan und 20-30 Gew.-% TiO₂ umfasst, wobei bevorzugt das Füllpulver weiters 0,5-2 Gew.% Silizium, 0,001-0,1 Gew.-% Phosphor, 0,001-0,1 Gew.-% Schwefel, 0,01-0,1 Gew.-% Molybdän, 0,5-2 Gew.-% Aluminium, 3-6 Gew.-% Eisen, 5-15 ug/g Bor und/oder 400-800 µg/g Bismut umfasst, und bevorzugt das Füllpulver weiters Lichtbogenstabilisatoren aufweist und bevorzugt die Hülle folgende Richtanalyse aufweist:
C: 0,001-0,015 Gew.-%
Si: 0,30-0,60 Gew.-%
Mn: 0,90-1,30 Gew.-%
Cr: 18,0-19,5 Gew.-%
Ni: 9,70-10,5 Gew.-%, sowie ggf.:
N: 0,01-0,03 Gew.-%
P: 0,01-0,025 Gew.-%
S: 0,001-0,01 Gew.-%
Mo: 0,05-0,30 Gew.-%
Cu: 0,05-0,20 Gew.-%
Al: 0,01-0,03 Gew.-%
Co: 0,05-0,20 Gew.-%.

8. Rutile Fülldrahtelektrode nach Anspruch 7, **dadurch gekennzeichnet, dass** das Füllpulver folgende Richtanalyse aufweist:
C: 0,8-1,2 Gew.-%, insbesondere 1,0 Gew.-%
Mn: 33-37 Gew.-%, insbesondere 35,90 Gew.-%
Cr: 2,6-2,9 Gew.-%, insbesondere 2,70 Gew.-%
Ni: 13-15 Gew.-%, insbesondere 14,20 Gew.-%
W: 7-7,5 Gew.-%, insbesondere 7,10 Gew.-%
Ti: 1,5-2,5 Gew.-%, insbesondere 2,0 Gew.-%,
TiO₂: 22-28 Gew.-%, insbesondere 25 Gew.-%, sowie ggf.:
Si: 1-1,5 Gew.-%, insbesondere 1,20 Gew.-%
P: 0,005-0,02 Gew.-%, insbesondere 0,007 Gew.-%
S: 0,005-0,05 Gew.-%, insbesondere 0,010 Gew.-%
Mo: 0,02-0,07 Gew.-%, insbesondere 0,03 Gew.-%
Al: 1-1,5 Gew.-%, insbesondere 1,20 Gew.-%
B: 8-12 µg/g, insbesondere 10 µg/g
Fe: 4-5 Gew.-%, insbesondere 4,60 Gew.-%
Bi: 600-700 µg/g, insbesondere 625,5 µg/g.

9. Rutile Fülldrahtelektrode nach Anspruch 7 oder 8, **dadurch gekennzeichnet, dass** die Hülle folgende Richtanalyse aufweist:
C: 0,008 Gew.-%
Si: 0,40 Gew.-%
Mn: 1,10 Gew.-%
Cr: 18,60 Gew.-%
Ni: 10,10 Gew.-%, sowie ggf.:
N: 0,015 Gew.-%
P: 0,01-0,025 Gew.-%
S: 0,001-0,01 Gew.-%
Mo: 0,05-0,30 Gew.-%
Cu: 0,05-0,20 Gew.-%
Al: 0,01-0,03 Gew.-%
Co: 0,05-0,20 Gew.-%

10. Rutile Fülldrahtelektrode nach Anspruch 7, 8 oder 9, **dadurch gekennzeichnet, dass** das Gewicht des Füllpulvers zwischen 25 und 35%, bevorzugt 29% des Gewichts der Fülldrahtelektrode ausmacht.

11. Rutile Fülldrahtelektrode nach einem der Ansprüche 7 bis 10, **dadurch gekennzeichnet, dass** die Hülle von einem, bevorzugt überlappend, geschlossenen Band gebildet ist.

## Claims

1. A weld metal comprising the following reference analysis:
C: 0.15-0.25 wt%
Mn: 8.5-10.0 wt%
Cr: 15.5-16.0 wt%
Ni: 12.5-13.5 wt%
W: 2.0-3.0 wt%
Ti: 0.07-0.15, and optionally further components, in particular:
Si: 0.5-0.7 wt%
V: 0.07-0.11 wt%
Co: 0.08-0.16 wt%
Al: 0.005-0.02 wt%,
Balance: iron.

2. A weld metal according to claim 1, comprising the following reference analysis:
C: 0.2 wt%
Mn: 9.0 wt%
Cr: 15.6 wt%
Ni: 12.8 wt%
W: 2.2 wt%
Ti: 0.08, and optionally further components, in particular:
Si: 0.6 wt%
V: 0.09 wt%
Co: 0.09 wt%
Al: 0.015 wt%
Balance: iron

3. A weld metal according to claim 1 or 2, **characterized in that** the weld metal has a tensile strength larger than 600 MPa, preferably larger than 605 Mpa, particularly preferably at least 610 MPa.

4. A weld metal according to claim 1, 2 or 3, **characterized in that** the weld metal has a notched-bar impact work at +20° of larger than 80 J, preferably larger than 90 J, particularly preferably at least 100 J, wherein the notched-bar impact work is determined in a notched-bar impact test according to DIN EN ISO 148-1.

5. A weld metal according to any one of claims 1 to 4, **characterized in that** the weld metal has a notched-bar impact work at -196° of larger than 50 J, preferably larger than 55 J, particularly preferably at least 60 J, wherein the notched-bar impact work is determined in a notched-bar impact test according to DIN EN ISO 148-1.

6. A weld metal according to any one of claims 1 to 5, **characterized in that** the weld metal has an elongation at break A5 of more than 30%, preferably more than 35%.

7. A rutile flux-cored wire electrode for producing a weld metal according to any one of claims 1 to 6, comprising a filling powder and a sheath enclosing the filling powder, **characterized in that** the filling powder comprises 0.1-2.0 wt% carbon, 30-40 wt% manganese, 2.5-3.0 wt% chromium, 11-17 wt% nickel, 6.5-8 wt% tungsten, 1-3 wt% titanium and 20-30 wt% TiO₂, wherein preferably the filling powder further comprises 0.5-2 wt% silicon, 0.001-0.1 wt% phosphorus, 0.001-0.1 wt% sulfur, 0.01-0.1 wt% molybdenum, 0.5-2 wt% aluminum, 3-6 wt% iron, 5-15 µg/g boron and/or 400-800 µg/g bismuth and preferably the filling powder further comprises electric arc stabilizers and preferably the sheath comprises the following reference analysis:
C: 0.001-0.015 wt%
Si: 0.30-0.60 wt%
Mn: 0.90-1.30 wt%
Cr: 18.0-19.5 wt%
Ni: 9.70-10.5 wt%, and optionally:
N: 0.01-0.03 wt%
P: 0.01-0.025 wt%
S: 0.001-0.01 wt%
Mo: 0.05-0.30 wt%
Cu: 0.05-0.20 wt%
Al: 0.01-0.03 wt%
Co: 0.05-0.20 wt%.

8. A rutile flux-cored wire electrode according to claim 7, **characterized in that** the filling powder comprises the following reference analysis:
C: 0.8 -1.2 wt%, in particular 1.0 wt%
Mn: 33-37 wt%, in particular 35.90 wt%
Cr: 2.6-2.9 wt%, in particular 2.70 wt%
Ni: 13-15 wt%, in particular 14.20 wt%
W: 7-7.5 wt%, in particular 7.10 wt%
Ti: 1.5-2.5 wt%, in particular 2.0 wt%,
TiO₂: 22-28 wt%, in particular 25 wt%, and optionally:
Si: 1-1.5 wt%, in particular 1.20 wt%
P: 0.005-0.02 wt%, in particular 0.007 wt%
S: 0.005-0.05 wt%, in particular 0.010 wt%
Mo: 0.02-0.07 wt%, in particular 0.03 wt%
Al: 1-1.5 wt%, in particular 1.20 wt%
B: 8-12 µg/g, in particular 10 µg/g
Fe: 4-5 wt%, in particular 4.60 wt%
Bi: 600-700 µg/g, in particular 625.5 µg/g.

9. A rutile flux-cored wire electrode according to claim 7 or 8, **characterized in that** the sheath comprises the following reference analysis:
C: 0.008 wt%
Si: 0.40 wt%
Mn: 1.10 wt%
Cr: 18.60 wt%
Ni: 10.10 wt%, and optionally:
N: 0.015 wt%
P: 0.01-0.025 wt%
S: 0.001-0.01 wt%
Mo: 0.05-0.30 wt%
Cu: 0.05-0.20 wt%
Al: 0.01-0.03 wt%
Co: 0.05-0.20 wt%.

10. A rutile flux-cored wire electrode according to claim 7, 8 or 9, **characterized in that** the weight of the filling powder makes up between 25 and 35%, preferably 29%, of the weight of the flux-cored wire electrode.

11. A rutile flux-cored wire electrode according to any one of claims 7 to 10, **characterized in that** the sheath is comprised of a, preferably overlapping, closed strip.

## Revendications

1. Métal d'apport de soudage qui présente l'analyse indicative suivante :
C : 0,15-0,25 % en poids
Mn : 8,5-10,0 % en poids
Cr : 15,5-16,0 % en poids
Ni : 12,5-13,5 % en poids
W : 2,0-3,0 % en poids
Ti : 0,07-0,15 % en poids, ainsi qu'éventuellement d'autres constituants, en particulier :
Si : 0,5-0,7 % en poids
V : 0,07-0,11 % en poids
Co : 0,08-0,16 % en poids
Al : 0,005-0,02 % en poids,
le reste étant du fer.

2. Métal d'apport de soudage selon la revendication 1 qui présente l'analyse indicative suivante :
C : 0,2 % en poids
Mn : 9,0% en poids
Cr : 15,6 % en poids
Ni : 12,8 % en poids
W : 2,2 % en poids
Ti : 0,08, ainsi qu'éventuellement d'autres constituants, en particulier :
Si : 0,6 % en poids
V : 0,09 % en poids
Co : 0,09 % en poids
Al : 0,015 % en poids,
le reste étant du fer.

3. Métal d'apport de soudage selon la revendication 1 ou 2, **caractérisé en ce que** le métal d'apport de soudage présente une résistance à la traction supérieure à 600 MPa, de préférence supérieure à 605 MPa, de manière particulièrement préférée au moins de 610 MPa.

4. Métal d'apport de soudage selon la revendication 1, 2 ou 3, **caractérisé en ce que** le métal d'apport de soudage présente une résilience à +20 °C de plus de 80 J, de préférence de plus de 90 J, de manière particulièrement préférée au moins de 100 J, dans lequel l'énergie de choc est déterminée dans un essai de résilience selon DIN EN ISO 148-1.

5. Métal d'apport de soudage selon l'une quelconque des revendications 1 à 4, **caractérisé en ce que** le métal d'apport de soudage présente une résilience à -196 °C de plus de 50 J, de préférence de plus de 55 J, de manière particulièrement préférée d'au moins 60 J, dans lequel l'énergie de choc est déterminée dans un essai de résilience selon DIN EN ISO 148-1.

6. Métal d'apport de soudage selon l'une quelconque des revendications 1 à 5, **caractérisé en ce que** le métal d'apport de soudage présente un allongement à la rupture A5 de plus de 30 %, de préférence de plus de 35 %.

7. Electrode fourée rutile pour la fabrication d'un métal d'apport de soudage selon l'une quelconque des revendications 1 à 6, comprenant une poudre de remplissage et une enveloppe entourant la poudre de remplissage, **caractérisée en ce que** la poudre de remplissage comporte 0,1-2,0 % en poids de carbone, 30-40 % en poids de manganèse, 2,5-3,0 % en poids de chrome, 11-17 % en poids de nickel, 6,5-8 % en poids de tungstène, 1-3 % en poids de titane et 20-30 % en poids de TiO₂, dans laquelle de préférence, la poudre de remplissage comporte en outre 0,5-2 % de silicium, 0,001-0,1 % en poids de phosphore, 0,001-0,1 % en poids de soufre, 0,01-0,1 % en poids de molybdène, 0,5-2 % en poids d'aluminium, 3-6 % en poids de fer, 5-15 µg/g de bore et/ou 400-800 µg/g de bismuth, et de préférence la poudre de remplissage présente en outre des stabilisateurs d'arc électrique et l'enveloppe présente de préférence l'analyse indicative suivante :
C : 0,001-0,015 % en poids
Si : 0,30-0,60 % en poids
Mn : 0,90-1,30 % en poids
Cr : 18,0-19,5 % en poids
Ni : 9,70-10,5 % en poids, ainsi qu'éventuellement :
N : 0,01-0,03 % en poids
P : 0,01-0,025 % en poids
S : 0,001-0,01 % en poids
Mo : 0,05-0,30 % en poids
Cu : 0,05-0,20 % en poids
Al : 0,01-0,03 % en poids
Co : 0,05-0,20 % en poids.

8. Electrode fourée rutile selon la revendication 7, **caractérisée en ce que** la poudre de remplissage présente l'analyse indicative suivante :
C : 0,8-1,2 % en poids, en particulier 1,0 % en poids
Mn : 33-37 % en poids, en particulier 35,90 % en poids
Cr : 2,6-2,9 % en poids, en particulier 2,70 % en poids
Ni : 13-15 % en poids, en particulier 14,20 % en poids
W : 7-7,5 % en poids, en particulier 7,10 % en poids
Ti : 1,5-2,5 % en poids, en particulier 2,0 % en poids,
TiO₂: 22-28 % en poids, en particulier 25 % en poids, ainsi qu'éventuellement :
Si : 1-1,5 % en poids, en particulier 1,20 % en poids
P : 0,005-0,02 % en poids, en particulier 0,007 % en poids
S : 0,005-0,05 % en poids, en particulier 0,010 % en poids
Mo : 0,02-0,07 % en poids, en particulier 0,03 % en poids
Al : 1-1,5 % en poids, en particulier 1,20 % en poids
B : 8-12 µg/g, en particulier 10 µg/g
Fe : 4-5 % en poids, en particulier 4,60 % en poids
Bi : 600-700 µg/g, en particulier 625,5 µg/g.

9. Electrode fourée rutile selon la revendication 7 ou 8, **caractérisée en ce que** l'enveloppe présente l'analyse indicative suivante :
C : 0,008 % en poids
Si : 0,40 % en poids
Mn : 1,10 % en poids
Cr : 18,60 % en poids
Ni : 10,10 % en poids, ainsi qu'éventuellement :
N : 0,015 % en poids
P : 0,01-0,025 % en poids
S : 0,001-0,01 % en poids
Mo : 0,05-0,30 % en poids
Cu : 0,05-0,20 % en poids
Al : 0,01-0,03 % en poids
Co : 0,05-0,20 % en poids

10. Electrode fourée rutile selon la revendication 7, 8 ou 9, **caractérisée en ce que** le poids de la poudre de remplissage représente entre 25 et 35 %, de préférence 29 % du poids de l'électrode fourée.

11. Electrode fourée rutile selon l'une quelconque des revendications 7 à 10, **caractérisée en ce que** l'enveloppe est formée par une bande fermée, de préférence par chevauchement.
